# EUROPÄISCHE PATENTANMELDUNG

(11) **EP 4 838 105 A1**
(43) Veröffentlichungstag der Anmeldung: **11.11.2026**
(21) Anmeldenummer: 26176886.5
(22) Anmeldetag: 06.05.2026
(51) Int. Cl.: F16B 2/24, F16B 37/04, F16B 5/02

(54) **BLECHMUTTER**

(30) Priorität: 06.05.2025 DE 102025117348
(71) Anmelder: LISI AUTOMOTIVE Mecano GmbH, 69123 Heidelberg (DE)
(72) Erfinder: Guttmann, Toni, 69181 Leimen / St. Ilgen (DE)
(74) Vertreter: Habermann Intellectual Property Partnerschaft von Patentanwälten mbB

(57) **Zusammenfassung**

Eine Blechmutter (1) weist einen Klemmabschnitt (4) zum klemmenden Festlegen der Blechmutter (1) an einem Randbereich (5) eines Bauteils (6) und einen Aufnahmeabschnitt (2) zum Aufnehmen einer in den Aufnahmeabschnitt (2) eindrehbaren Befestigungsschraube auf. Der Aufnahmeabschnitt (2) weist ein Anlageelement (7) mit einer Anlagefläche (8) und mit einer von der Anlagefläche (8) in Richtung einer quer zu der Anlagefläche verlaufenden Schraubengewindeachse (9) vorspringende Aufwölbung (10) auf. In der Aufwölbung (10) ist eine Aussparung (11) ausgebildet, die von einem Aufwölbungsrand (12) umgeben und begrenzt ist, der längs einer Umfangslinie um die Aussparung (11) eine Gewindegangflanke bildet. Der Aufnahmeabschnitt (2) weist auch ein Klemmzungenelement (15) mit mindestens einer in eine Ausnehmung (16) hineinragenden Klemmzunge (17) auf. Das Klemmzungenelement (15) ist in Richtung der Schraubengewindeachse (9) beabstandet von dem Anlageelement (7) angeordnet. Die Ausnehmung (16) des Klemmzungenelements (15) ist überlappend mit der Aussparung (11) des Anlageelements (7) angeordnet. Eine in die Ausnehmung (16) des Klemmzungenelements (15) eingedrehte Befestigungsschraube tritt in einen formschlüssigen Eingriff mit der mindestens einen Klemmzunge (17) ein.

## Beschreibung

Die Erfindung betrifft eine Blechmutter mit einem Klemmabschnitt zum klemmenden Festlegen der Blechmutter an einem Randbereich eines Bauteils und mit einem Aufnahmeabschnitt zum Aufnehmen einer in den Aufnahmeabschnitt eindrehbaren Schraube, wobei der Aufnahmeabschnitt ein Anlageelement mit einer Anlagefläche aufweist, sodass bei einer bestimmungsgemäßen Verwendung das Anlageelement mit der Anlagefläche an einer Außenseite des Bauteils anliegt, wobei das Anlageelement eine von der Anlagefläche in Richtung einer quer zu der Anlagefläche verlaufenden Schraubengewindeachse vorspringende Aufwölbung mit einer in der Aufwölbung ausgebildeten Aussparung aufweist, und wobei die Aussparung von einem Aufwölbungsrand umgeben und begrenzt ist, der längs einer Umfangslinie um die Aussparung eine Gewindegangflanke bildet.

Blechmuttern sind Verbindungselemente und dienen insbesondere der sicheren Befestigung von Schraubenverbindungen in den Randbereichen von dünnwandigen Bauteilen, wie sie beispielsweise bei Kraftfahrzeugen häufig benötigt und verwendet werden. Dabei wird eine Blechmutter mit dem Klemmabschnitt auf den dünnwandigen Randbereich des Bauteils aufgeschoben und klemmend festgelegt. Eine Befestigungsschraube kann dann in den Aufnahmeabschnitt der Blechmutter eingedreht und darin formschlüssig festgelegt werden. Zu diesem Zweck kann der Aufnahmeabschnitt eine Mutter bzw. einen Gewindehülsenabschnitt aufweisen, die entweder direkt in einen aus einem Blechprofil hergestellten Aufnahmeabschnitt der Blechmutter integriert sind oder als aufsteckbares bzw. einklipsbares Gewindeelement ausgebildet sein, welches gesondert hergestellt und anschließend in einem Käfiggehäuse der Blechmutter angeordnet und festgelegt wird.

Eine Blechmutter weist in der Regel eine einteilige oder zweiteilige Formgebung aus einem mechanisch ausreichend stabilen Material auf. Eine beispielsweise aus einem federnden Stahlblech hergestellte Blechmutter kann eine geeignete Formgebung aufweisen, sodass der Klemmabschnitt eine federnde Klemmwirkung für die klemmende Festlegung an einem Bauteil und der Aufnahmeabschnitt eine ausreichende mechanische Festigkeit für die zuverlässige Aufnahme und Festlegung einer Befestigungsschraube aufweist. Durch eine federnde Vorspannung des Klemmabschnitts wird die auf den Randbereich des Bauteils aufgeschobene Blechmutter dort festgelegt und in der gewünschten Position fixiert, ohne dass gesonderte Befestigungsmittel für die Blechmutter an dem Bauteil erforderlich sind.

Der Aufnahmeabschnitt weist regelmäßig ein separat hergestelltes Gewindeelement oder aber eine gewindeförmige Struktur auf, welche durch eine geeignete Verformung eines zunächst ebenflächigen oder plattenförmigen Aufnahmeelements ausgebildet wird. Beim Einschrauben einer Befestigungsschraube verformt sich die Blechmutter leicht elastisch und erzeugt dadurch eine konstante Anpresskraft, die ein selbsttätiges Lösen der Verbindung verhindert. Ein in dem Klemmabschnitt ausgebildetes oder angeordnetes Gegengewinde ist deshalb bei einer geeigneten Ausgestaltung des Aufnahmeabschnitts für die zuverlässige Festlegung einer Befestigungsschraube nicht erforderlich.

Blechmuttern finden vor allem im Automobilbau, im Maschinenbau, in der Elektroinstallationstechnik sowie im Bereich von Haushaltsgeräten Anwendung. Sie ermöglichen eine schnelle, montagefreundliche und kosteneffiziente Befestigung, insbesondere an schwer zugänglichen Stellen oder bei beengten Platzverhältnissen. Durch die Kombination aus Haltefunktion und Gewindeelement in einem Bauteil reduzieren sie den Montageaufwand und ermöglichen lösbare Verbindungen auch in dünnwandigen Bauelementen, die selbst kein tragfähiges Innengewinde aufnehmen könnten.

Aufgrund dieser konstruktiven Merkmale und funktionellen Vorteile stellen Blechmuttern eine bewährte und vielseitig einsetzbare Lösung für zahlreiche technische Anwendungen dar.

Um eine zuverlässige Aufnahme und Festlegung der Befestigungsschraube in dem Aufnahmeabschnitt ermöglichen zu können ist es üblicherweise erforderlich, die Abmessungen und Ausgestaltung des Aufnahmeabschnitts möglichst exakt an die relevanten Abmessungen der für die Befestigung vorgesehenen Befestigungsschraube anzupassen. In vielen Fällen wird es als eine notwendige Bedingung für eine zuverlässige Verwendung der Blechmutter angesehen, dass die betreffende Blechmutter ausschließlich mit einer auf diese Blechmutter abgestimmte Befestigungsschraube verwendet wird. Dies führt regelmäßig dazu, dass mit einer vorgegebenen Blechmutter ausschließlich Befestigungsschrauben verwendet werden sollten, deren Gewindeschaft innerhalb enger Fertigungstoleranzen exakt eine vorgegebene Formgebung und vorgegebene Abmessungen aufweist. Der Aufwand für die Herstellung geeigneter Befestigungsschrauben ist dann wegen der engen Fertigungstoleranzen oftmals vergleichsweise hoch. Zudem muss für jeden Typ einer Blechmutter eine auf diese Blechmutter abgestimmte geeignete Befestigungsschraube bereitgehalten und verwendet werden, wodurch sich auch der Aufwand für die Lagerung, die Bereitstellung und die Montage erhöhen.

Es wird deshalb als eine Aufgabe der Erfindung angesehen, eine Blechmutter so auszugestalten, dass sie für die Festlegung von möglichst unterschiedlichen Schrauben an einem Bauteil geeignet ist, dessen Randbereich eine möglichst unterschiedliche Dicke aufweisen kann.

Diese Aufgabe wird bei einer Blechmutter mit den eingangs genannten Merkmalen dadurch gelöst, dass der Aufnahmeabschnitt auch ein Klemmzungenelement mit mindestens einer in eine Ausnehmung hineinragenden Klemmzunge aufweist, wobei das Klemmzungenelement in Richtung der Schraubengewindeachse beabstandet von dem Anlageelement angeordnet ist und die Ausnehmung des Klemmzungenelements überlappend mit der Aussparung des Anlageelements angeordnet ist, sodass eine Befestigungsschraube, die bei einer bestimmungsgemäßen Verwendung der Blechmutter von einer dem Klemmzungenelement abgewandten Seite durch die Aussparung des Anlageelements eingedreht wird, nachfolgend in der Ausnehmung des Klemmzungenelements in einen formschlüssigen Eingriff mit der mindestens einen Klemmzunge eintritt. Durch die Aufwölbung des Anlageelements und die um die Aussparung in dem Anlageelement gebildete Gewindegangflanke wird erreicht, dass die Befestigungsschraube beim Eindrehen in das Anlageelement durch den Eingriff mit der Gewindegangflanke geführt wird und das Eindrehen der Befestigungsschraube während der Montage erleichtert wird. Zudem kann über die Aufwölbung und die um die Aussparung in der Aufwölbung gebildete Gewindegangflanke ein hohes Anzugsmoment der eingedrehten Befestigungsschraube aufgenommen und abgetragen werden, obwohl sich die Gewindegangflanke entlang der Umfangslinie des Aussparungsrands nur um maximal eine Umfangslänge des Aussparungsrands erstreckt. Auf diese Weise können trotz einer geringen Erstreckung der Aufwölbung in Richtung der Schraubengewindeachse, die üblicherweise senkrecht zu der Anlagefläche des Anlageelements gerichtet ist, eine rasche Montage und ein hohes Anzugsmoment der montierten und bei einer bestimmungsgemäßen Verwendung in dem Anlageelement festgelegten Befestigungsschraube ermöglicht werden.

Weiterhin wird bei einer bestimmungsgemäßen Verwendung der Blechmutter durch das Klemmzungenelement ein zusätzlicher Eingriff der mindestens einen Klemmzunge mit dem Gewindeschaft der Befestigungsschraube bewirkt. Während des Eindrehens der Befestigungsschraube in die Ausnehmung in dem Klemmzungenelement wird die in die Ausnehmung hineinragende Klemmzunge verformt und eine zusätzliche kraftschlüssige Verbindung zwischen der Klemmzunge und der Befestigungsschraube gebildet. Auf diese Weise wird während des Eindrehens der Befestigungsschraube ein zusätzliches Eindrehmoment erzeugt, welches dem Eindrehen der Befestigungsschraube entgegenwirkt und die Befestigungsschraube in der jeweiligen Position zurückhält. In gleicher Weise wird im Falle eines Herausdrehens der Befestigungsschraube ein Losdrehmoment erzeugt, welches dem Herausdrehen entgegenwirkt. Es hat sich gezeigt, dass bei einer geeigneten Ausgestaltung der mindestens einen Klemmzunge die Blechmutter mit verschiedenen Befestigungsschrauben verwendet werden kann, wobei sich die Befestigungsschrauben hinsichtlich eines Durchmessers eines Schraubenkerns der Befestigungsschraube sowie hinsichtlich der Formgebung des Schraubengewindes der Befestigungsschraube unterscheiden können, welches entweder mit oder ohne eine Kernauskehlung ausgestaltet sein kann. Die mindestens eine Klemmzunge kann sich während des Eindrehens der Befestigungsschraube an unterschiedliche Durchmesser des Schraubenkerns und an Schraubengewinde mit einer Kernauskehlung oder ohne eine Kernauskehlung anpassen und jeweils ein vergleichbar großes Ein- und Losdrehmoment erzeugen.

Auf diese Weise kann die Blechmutter mit der Kombination aus dem Anlageelement und dem Klemmzungenelement mit einer Vielzahl von unterschiedlichen Befestigungsschrauben verwendet werden bzw. mit Befestigungsschrauben verwendet werden, deren Durchmesser innerhalb eines großen Bereichs variieren kann, sodass für die Herstellung der Befestigungsschrauben keine engen Fertigungstoleranzen vorgegeben werden müssen und die Befestigungsschrauben kostengünstig herstellbar sind und dennoch einfach und zuverlässig mit der Blechmutter verwendet und montiert werden können.

Einer vorteilhaften Ausgestaltung des Erfindungsgedankens zufolge ist vorgesehen, dass die mindestens eine Klemmzunge an einem der Ausnehmung zugewandten Klemmzungenrand eine konkave Einbuchtung aufweist, sodass der Klemmzungenrand der Klemmzunge bei einer bestimmungsgemäßen Verwendung der Blechmutter an einem sich in die Einbuchtung erstreckenden Gewindeschaft einer durch die Ausnehmung ragenden Befestigungsschraube anliegt. Durch eine geeignete und an den Gewindeschaft der für die Montage der Blechmutter vorgesehenen Befestigungsschraube angepasste Einbuchtung wird erreicht, dass der Klemmzungenrand nicht lediglich tangential an dem Gewindeschaft der eingedrehten Befestigungsschraube anliegt, sondern über einen Winkelbereich in Umfangsrichtung an dem Gewindeschaft anliegt. Auf diese Weise kann über den Winkelbereich hinweg eine Wirkverbindung zwischen der eingedrehten Befestigungsschraube und der Klemmzunge erzeugt werden, wodurch die Verformung der Klemmzunge während des Eindrehens der Befestigungsschraube zuverlässig vorgegeben werden kann und eine besonders zuverlässige Festlegung der Befestigungsschraube bewirkt wird.

Optional kann weiterhin vorgesehen sein, dass die mindestens eine Klemmzunge an einem der Ausnehmung zugewandten Klemmzungenrand einen in Umfangsrichtung zunehmend größeren Abstand zu der Anlagefläche des Anlageelements aufweist. Der Verlauf des Klemmzungenrands kann an einen Verlauf einer Gewindegangflanke der für die Verwendung mit der Blechmutter vorgesehenen Befestigungsschraube angepasst sein. Auf diese Weise kann erreicht werden, dass bei einem Eindrehen der Befestigungsschraube in die Ausnehmung in dem Klemmzungenelement die in diese Ausnehmung ragende Klemmzunge mit dem Klemmzungenrand im Wesentlichen von der Anlagefläche weg verformt wird und keine quer zu der Schraubengewindeachse gerichtete Verkippung oder Verformung des Klemmzungenrands zusätzlich erzwungen werden muss. Der Klemmzungenrand kann dann entweder an einer Gewindegangflanke anliegen oder parallel zu der Gewindegangflanke verlaufend an dem Schraubenkern anliegen. Dadurch wird das Eindrehen der Befestigungsschraube in die Ausnehmung in dem Klemmzungenelement erleichtert und das Risiko eines unerwünschten Verkantens zusätzlich reduziert.

In vorteilhafter Weise ist optional vorgesehen, dass die mindestens eine Klemmzunge elastisch verformbar ausgebildet ist, sodass die Klemmzunge bei einer bestimmungsgemäßen Verwendung der Blechmutter durch den Gewindeschaft der durch die Ausnehmung ragenden Befestigungsschraube entgegen einer Klemmzungenfederkraft von dem Anlageelement weg verformt wird. Die elastisch verformbare Klemmzunge kann sich besonders gut an unterschiedlich gestaltete Gewindeschäfte der jeweils verwendeten Befestigungsschrauben anpassen und sowohl an unterschiedliche Durchmesser des Gewindeschafts als auch insbesondere an die jeweilige Formgebung des Schraubenkerns mit oder ohne Kernauskehlung anpassen. Durch die entgegen der Klemmzungenfederkraft erzwungene Verformung der Klemmzunge wird die verformte Klemmzunge an den Gewindeschaft der Befestigungsschraube angepresst und eine besonders zuverlässige Festlegung der bestimmungsgemäß in die Blechmutter eingedrehten Befestigungsschraube erreicht.

Die entgegen der Klemmzungenfederkraft erzwungene Verformung der mindestens einen Klemmzunge verhindert zudem, dass sich während einer bestimmungsgemäßen Benutzung der Blechmutter wegen dabei auftretender Erschütterungen oder Vibrationen des Bauteils die Befestigungsschraube unbeabsichtigt von der Blechmutter lösen könnte.

Gemäß einer weiteren Ausgestaltung des Erfindungsgedankens kann zudem vorgesehen sein, dass die mindestens eine Klemmzunge in einer radialen Richtung in die Ausnehmung hinein einen in der Richtung der Schraubengewindeachse gekrümmten Verlauf aufweist. Durch den gekrümmten Verlauf kann ohne einen größeren konstruktiven Aufwand eine bevorzugte Verformung der Klemmzunge während des Eindrehens der Befestigungsschraube vorgegeben und ein unerwünschtes Verkanten der Klemmzunge an dem Gewindeschaft der Befestigungsschraube verhindert werden. Zudem kann der gekrümmte Verlauf der Klemmzunge in vorteilhafter Weise an die Formgebung der Aufwölbung angepasst sein, sodass lediglich ein geringer Abstand zwischen dem Klemmzungenelement und dem Anlageelement vorgegeben sein muss und eine besonders geringe Bauhöhe bzw. Erstreckung der Blechmutter in der Richtung der Schraubengewindeachse erreicht werden kann.

Es wird als eine besonders vorteilhafte Ausgestaltung des Erfindungsgedankens angesehen, dass das Klemmzungenelement zwei Klemmzungen aufweist, die von zwei einander gegenüberliegenden Seiten aus in die Ausnehmung hineinragen. Bei zwei Klemmzungen kann jede der beiden Klemmzungen einen sich über fast eine halbe Umfangslinie der Befestigungsschraube erstreckenden Klemmzungenrand sowie eine vergleichsweise große Erstreckung quer zu der Schraubengewindeachse aufweisen. Eine derart ausgestaltete Klemmzunge kann bei einer erzwungenen Verformung eine hohe Klemmzungenfederkraft erzeugen, mit welcher die Klemmzunge mit dem Klemmzungenrand an die eingedrehte Befestigungsschraube angepresst wird. Zudem kann bei einer großen Erstreckung des Klemmzungenrands in Umfangsrichtung eine zuverlässige Anlage des Klemmzungenrands an dem Schraubenkern bzw. an einer Gewindegangflanke ermöglicht und eine zuverlässige und eine hohe Kraftübertragung ermöglichende Wirkverbindung der Klemmzunge mit der Befestigungsschraube ermöglicht werden.

Einer Ausgestaltung des Erfindungsgedankens zufolge kann vorgesehen sein, dass der Klemmabschnitt einen ersten Klemmschenkel aufweist, der an einem ersten Ende mit dem Anlageelement verbunden ist und an einem zweiten Ende über einen Verbindungsabschnitt mit einem zweiten Klemmschenkel verbunden ist, der auf einer dem Anlageelement abgewandten Seite des ersten Klemmschenkels angeordnet ist und zusammen mit dem Verbindungsabschnitt und dem ersten Klemmschenkel ein U-förmiges Klemmprofil bildet, und dass der erste Klemmschenkel an seinem zweiten Ende in Richtung des Klemmzungenelements über die Anlagefläche des Anlageelements vorspringt und der erste Klemmschenkel relativ zu der Anlagefläche des Anlageelements von dem Klemmzungenelement weg verschwenkt wird, wenn das Klemmprofil der Blechmutter bei einer bestimmungsgemäßen Verwendung auf den Randbereich des Bauteils aufgeschoben wird. Bei herkömmlichen Blechmuttern mit einem Klemmabschnitt mit zwei Klemmschenkeln wird der Klemmabschnitt üblicherweise entweder von dem gleichzeitig als Klemmschenkel dienenden Anlageelement und einem beabstandet dazu angeordneten Klemmschenkel oder von zwei Klemmschenkeln gebildet, wobei die zwei Klemmschenkel auf derselben Seite der Anlagefläche angeordnet sind. Ein maximaler Abstand der beiden Klemmschenkel wird dann durch den die beiden Klemmschenkel verbindenden Verbindungsabschnitt vorgegeben. Da dieser Verbindungsabschnitt vollständig auf einer Seite der Anlagefläche angeordnet ist, die gegenüber der von der Anlagefläche der vorspringenden Aufwölbung liegt, wird der für die Montage der Blechmutter benötigte Bauraum auf dieser Seite maßgeblich durch den Verbindungsabschnitt bzw. durch dessen Erstreckung längs der quer zu der Anlagefläche verlaufenden Schraubengewindeachse vorgegeben. Im Gegensatz dazu erstreckt sich bei der voranstehend beschriebenen erfindungsgemäßen Ausgestaltung des Klemmabschnitts der Verbindungsabschnitt vor der Montage an einem Randbereich des Bauteils zumindest teilweise auf die Seite der Anlagefläche, in welche auch die Aufwölbung vorspringt. Die Erstreckung der Blechmutter längs der Schraubengewindeachse ist dann bei einem gleichgroßen Verbindungsabschnitt deutlich kürzer als bei einer Blechmutter mit einem in herkömmlicher Weise ausgestalteten Klemmabschnitt.

Wenn der Randbereich des Bauteils, auf welchen der Klemmabschnitt während der Montage der Blechmutter aufgeschoben wird, vergleichsweise dünnwandig ausgebildet ist und eine kleinere Erstreckung als der Verbindungsabschnitt in Richtung der Schraubengewindeachse aufweist, wird ein Abstand des zweiten Klemmschenkels von der Anlagefläche vergrößert und der erste Klemmschenkel, der über den Verbindungsabschnitt mit dem zweiten Klemmschenkel verbunden ist, etwas verschwenkt, ohne dass er flächig an dem Randbereich des Bauteils anliegt. Stattdessen liegt die Anlagefläche des Anlageelements an dem Randbereich des Bauteils an und bewirkt zusammen mit dem zweiten Klemmschenkel eine klemmende Festlegung der Blechmutter an dem Randbereich des Bauteils. Die Erstreckung der fertig montierten Blechmutter längs der Schraubengewindeachse ist dann deutlich geringer als bei einem Bauteil mit einem im Vergleich dazu dicken Randbereich, der während der Montage der Blechmutter eine maximale Verschwenkung des ersten Klemmschenkels erzwingt, sodass der erste Klemmschenkel flächenbündig mit der Anlagefläche des Anlageelements ausgerichtet ist und ein Abstand des zweiten Klemmschenkels zu der Anlagefläche durch die Erstreckung des Verbindungsabschnitts vorgegeben und begrenzt ist.

Im Hinblick auf einen möglichst geringen Bauraum ist es optional zweckmäßig, dass die Blechmutter quer zu der Anlagefläche eine Blechmutterhöhenerstreckung aufweist und dass der Verbindungsabschnitt des Klemmabschnitts quer zu der Anlagefläche eine Verbindungsabschnitthöhenerstreckung aufweist, die mehr als 50% und vorzugsweise mehr als 80% der Blechmutterhöhenerstreckung beträgt. Dabei wird es als besonders vorteilhaft angesehen, dass optional der Verbindungsabschnitt des Klemmabschnitts quer zu der Anlagefläche eine Verbindungsabschnitthöhenerstreckung aufweist, und dass der Verbindungsabschnitt in einem unmontierten Zustand der Blechmutter mit mehr als 50% und vorzugsweise mit mehr als 70% der Verbindungsabschnitthöhenerstreckung in Richtung des Klemmzungenelements über die Anlagefläche des Anlageelements vorspringt. Auf diese Weise kann die Blechmutter in dem Aufnahmeabschnitt sowohl ein Anlageelement als auch im Wesentlichen parallel dazu und beabstandet dazu ein Klemmzungenelement aufweisen und der Klemmabschnitt einen vergleichsweise großen Verbindungsabschnitt mit einer großen Verbindungsabschnitthöhenerstreckung und einer dementsprechend großen Variabilität in dem Klemmabschnitt klemmend aufnehmbaren Randbereich eines Bauteils aufweisen, und dennoch eine geringe Blechmutterhöhenerstreckung aufweisen und damit einen vergleichsweise geringen Raumbedarf sowohl während der Lagerung und eines Transports vor der Montage als auch nach der Montage bei einer bestimmungsgemäßen Festlegung an dem Randbereich eines Bauteils benötigen.

Einer Ausgestaltung des Erfindungsgedankens zufolge ist vorgesehen, dass die Blechmutter einstückig hergestellt ist. Die Blechmutter kann beispielsweise aus einem geeigneten Faserkunststoffverbundmaterial oder aus einem geeigneten Metall hergestellt sein.

Im Hinblick auf eine möglichst kostengünstige Herstellung der Blechmutter kann optional vorgesehen sein, dass die Blechmutter aus einem ebenflächigen Blechzuschnitt hergestellt ist. In vorteilhafter Weise wird der Blechzuschnitt aus einem Blech aus Federstahl hergestellt.

Nachfolgend wird exemplarisch ein Ausführungsbeispiel für eine erfindungsgemäß ausgestaltete Blechmutter näher erläutert, welches in den Zeichnungen in verschiedenen Ansichten dargestellt ist. Es zeigt:

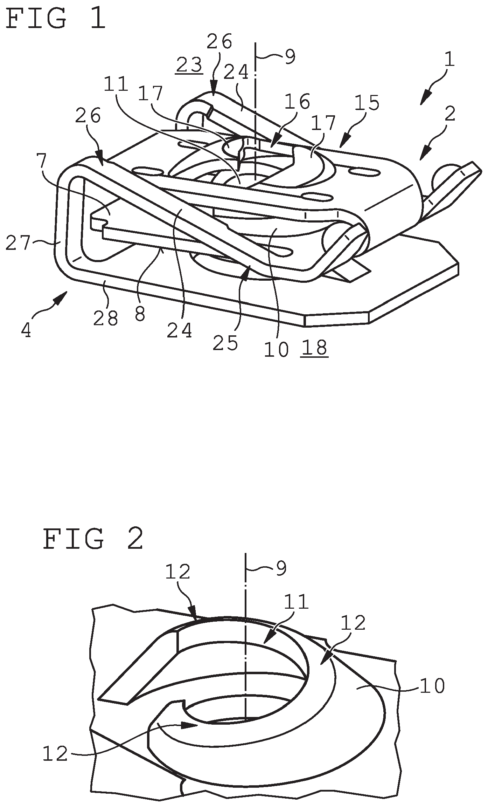

Fig. 1 eine perspektivische Ansicht einer erfindungsgemäß ausgestalteten Blechmutter mit einem Aufnahmeabschnitt und mit einem Klemmabschnitt, wobei der Aufnahmeabschnitt ein Aufnahmeelement und ein Klemmzungenelement aufweist,
Fig. 2 eine vergrößert dargestellte Ansicht des Aufnahmeelements in dem Aufnahmeabschnitt,
Fig. 3 eine vergrößert dargestellte Ansicht des Aufnahmeelements in dem Aufnahmeabschnitt, wobei eine Befestigungsschraube in das Aufnahmeelement eingedreht ist,
Fig. 4 eine vergrößert dargestellte Ansicht des Klemmzungenelements in dem Aufnahmeabschnitt,
Fig. 5 eine vergrößert dargestellte Ansicht des Klemmzungenelements in dem Aufnahmeabschnitt, wobei eine Befestigungsschraube in das Klemmzungenelements eingedreht ist,
Fig. 6 eine perspektivische Ansicht der in Fig. 1 gezeigten Blechmutter, wobei eine Befestigungsschraube in die Blechmutter eingedreht ist,

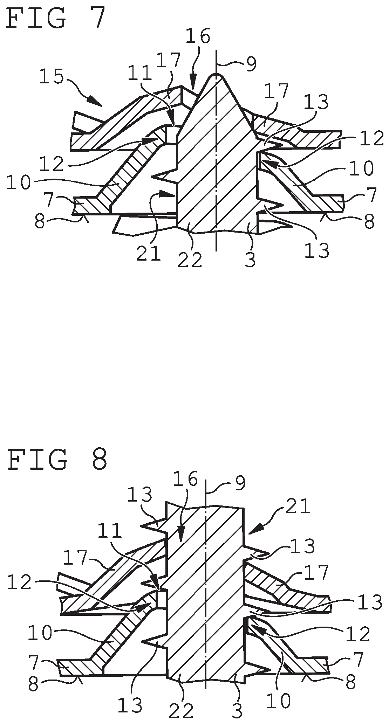

Fig. 7 eine Schnittansicht eines Teilbereichs der Blechmutter, wobei die Befestigungsschraube noch nicht vollständig in die Blechmutter eingedreht ist,
Fig. 8 eine Schnittansicht des auch in Fig. 7 gezeigten Teilbereichs der Blechmutter, wobei die Befestigungsschraube vollständig in die Blechmutter eingedreht ist,
Fig. 9 eine Seitenansicht der Blechmutter,
Fig. 10 eine Draufsicht auf eine Oberseite der Blechmutter,
Fig. 11 eine Ansicht einer Unterseite der Blechmutter,
Fig. 12 eine Seitenansicht der Blechmutter, die mit dem Klemmabschnitt an einem dünnwandigen Randbereich eines Bauteils klemmend festgelegt ist, und
Fig. 13 eine Seitenansicht der Blechmutter, die mit dem Klemmabschnitt an einem dickwandigen Randbereich eines Bauteils festgelegt ist, wobei der dickwandige Randbereich des Bauteils mehr als doppelt so dick als der dünnwandige Randbereich des Bauteils ist.

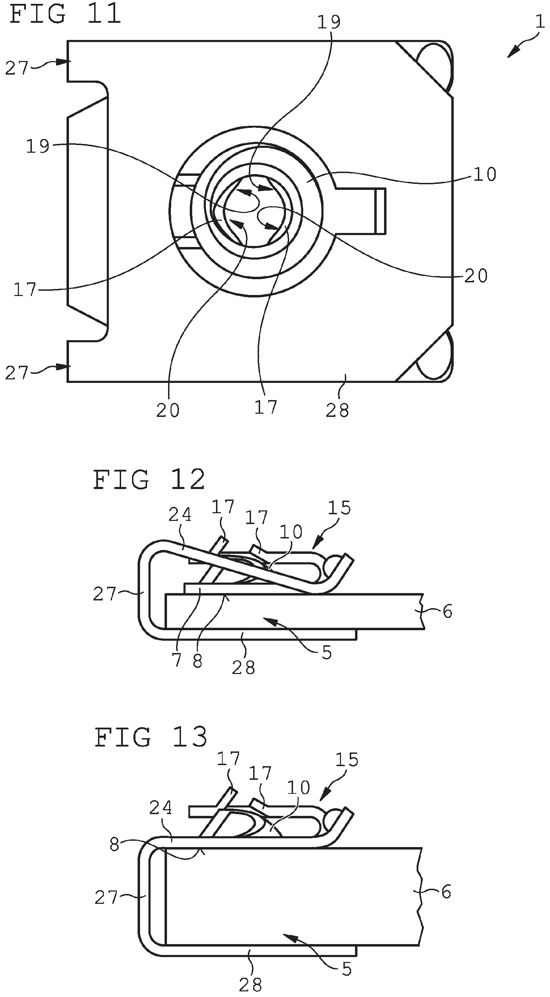

In allen Figuren ist jeweils ein Teilbereich oder eine Gesamtansicht einer Blechmutter 1 gezeigt, die einen Aufnahmeabschnitt 2 zum Aufnehmen einer in den Aufnahmeabschnitt 2 eindrehbaren und nur in einigen Figuren gezeigten Befestigungsschraube 3 und einen Klemmabschnitt 4 zum klemmenden Festlegen der Blechmutter 1 an einem nur in den Fig. 12 und 13 gezeigten Randbereich 5 eines Bauteils 6 aufweist.

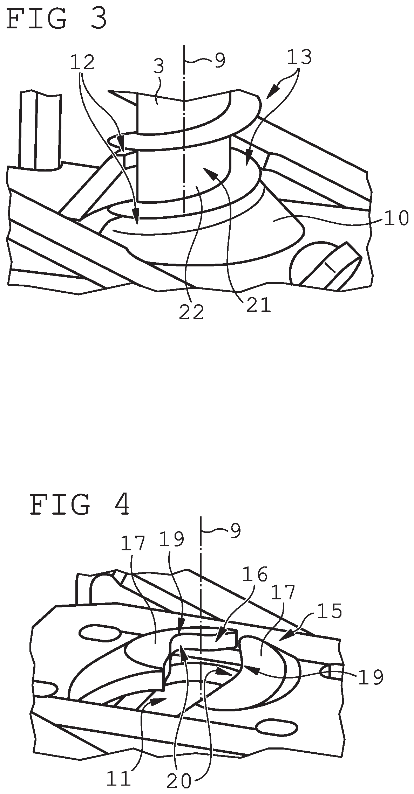

Der Aufnahmeabschnitt 2 weist ein Anlageelement 7 mit einer ebenflächigen Anlagefläche 8 und mit einer von der Anlagefläche 8 in Richtung einer quer zu der Anlagefläche verlaufenden Schraubengewindeachse 9 vorspringende Aufwölbung 10 auf. Die Aufwölbung 10 weist eine mittig ausgebildete Aussparung 11 auf. Die Aussparung 11 ist von einem Aufwölbungsrand 12 umgeben und begrenzt. Der Aufwölbungsrand 12 bildet längs einer Umfangslinie um die Aussparung 11 eine Gewindegangflanke. Die Formgebung der Aufwölbung 10, der Aussparung 11 und des die Aussparung 11 umgebenden Aufwölbungsrands 12 ist an eine Formgebung der Befestigungsschraube 3 angepasst, die zur Veranschaulichung in Fig. 3 in einem in die Aussparung 11 eingedrehten Zustand gezeigt ist. Während des Eindrehens der Befestigungsschraube 3 greift der Aufwölbungsrand 12 zwischen zwei Gewindegangflanken 13 eines Außengewindes 14 der Befestigungsschraube 3 ein und bildet eine Gewindegangflanke mit einer Auflagefläche für die über den Aufwölbungsrand 12 der Aufwölbung 10 des Anlageelements 7 hinweg gleitend eingedrehten Gewindegangflanke 13 der Befestigungsschraube 3.

Der Aufnahmeabschnitt 2 weist neben dem Anlageelement 7 auch ein Klemmzungenelement 15 mit mindestens einer und bei dem exemplarisch dargestellten Ausführungsbeispiel mit zwei in eine Ausnehmung 16 hineinragenden Klemmzungen 17 auf. Das Klemmzungenelement 15 ist in Richtung der Schraubengewindeachse 9 beabstandet von dem Anlageelement 7 angeordnet. Die Ausnehmung 16 des Klemmzungenelements 15 ist dabei überlappend mit der Aussparung 11 des Anlageelements 7 angeordnet. Die Befestigungsschraube 3, die bei einer bestimmungsgemäßen Verwendung der Blechmutter 1 von einer dem Klemmzungenelement 15 abgewandten Seite 18 durch die Aussparung 11 des Anlageelements 7 eingedreht wird, tritt nachfolgend in der Ausnehmung 16 des Klemmzungenelements 15 in einen formschlüssigen Eingriff mit den beiden Klemmzungen 17 ein.

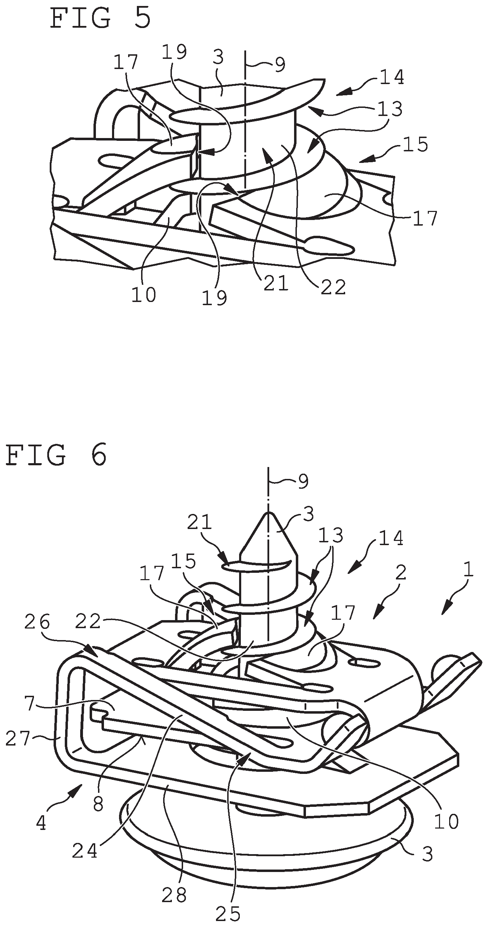

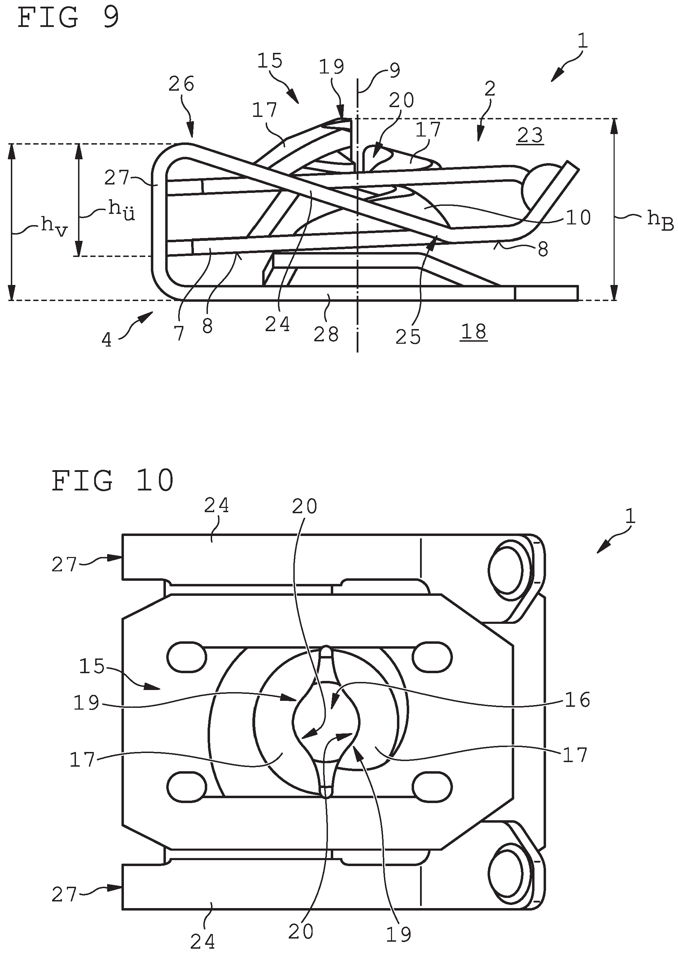

Die beiden Klemmzungen 17 weisen jeweils an einem der Ausnehmung 16 zugewandten Klemmzungenrand 19 eine insbesondere in Fig. 10 deutlich erkennbare konkave Einbuchtung 20 auf. Dabei ist jeder Klemmzungenrand 19 der beiden Klemmzungen 17 an einen sich bei einer bestimmungsgemäßen Verwendung der Blechmutter 1 durch die Ausnehmung 16 erstreckenden Gewindeschaft 21 der durch die Ausnehmung 16 ragenden Befestigungsschraube 3 angepasst, sodass der Klemmzungenrand 19 abschnittsweise an einer Umfangsfläche eines Schraubenkerns 22 des Gewindeschafts 21 der Befestigungsschraube 3 anliegt, wie es in Fig. 5 angedeutet ist.

Die beiden Klemmzungen 17 weisen jeweils an dem der Ausnehmung 16 zugewandten Klemmzungenrand 19 einen in Umfangsrichtung zunehmend größeren Abstand zu der Anlagefläche 8 des Anlageelements 7 auf, sodass der Klemmzungenrand 19 jeweils einen Gewindegangflankenabschnitt bildet, der in vorteilhafter Weise an den Gewindeschaft 21 der Befestigungsschraube 3 angepasst ist.

Jede der beiden Klemmzungen 17 weist in einer radialen Richtung in die Ausnehmung 16 hinein einen in der Richtung der Schraubengewindeachse 9 gekrümmten Verlauf auf. Dieser radiale Verlauf der Klemmzungen 17 ist an einen entsprechenden radialen Verlauf der Aufwölbung 10 derart angepasst, dass der Klemmzungenabschnitt 15 in Richtung der Schraubengewindeachse 9 lediglich einen geringen Abstand zu dem Anlageelement 7 aufweisen muss, jedoch sich die Klemmzungen 17 des Klemmzungenabschnitts 15 und die Aufwölbung 10 des Anlageelements 7 nicht berühren. Auf diese Weise kann die Blechmutter 1 auf einer dem Klemmabschnitt 4 gegenüberliegenden Seite 23 der Anlagefläche 8 eine besonders geringe Erstreckung des Aufnahmeabschnitts 2 in Richtung der Schraubengewindeachse 9 aufweisen.

Jede der beiden Klemmzungen 17 ist elastisch verformbar ausgebildet. Bei einer bestimmungsgemäßen Verwendung der Blechmutter 1 wird während des Eindrehens der Befestigungsschraube 3 durch den Gewindeschaft 21 der durch die Ausnehmung 16 ragenden Befestigungsschraube 3 entgegen einer Klemmzungenfederkraft von dem Anlageelement 7 weg verformt. Auf diese Weise kann erreicht werden, dass die beiden Klemmzungen 17 auch bei Befestigungsschrauben 3 mit unterschiedlich ausgestalteten Schraubenkernen 22 bzw. bei Schraubenkernen 22 mit oder ohne Kernauskehlung sowie bei Gewindeschäften 21 mit unterschiedlichen Durchmessern jeweils zuverlässig zwischen benachbarten Gewindeflanken 13 des Gewindeschafts 21 der Befestigungsschraube 3 eingreifen und über die gesamte Nutzungsdauer fest angedrückt werden.

Der Klemmabschnitt 4 der Blechmutter 1 weist einen ersten Klemmschenkel 24 auf, der an einem ersten Ende 25 mit dem Anlageelement 7 verbunden ist und an einem zweiten Ende 26 über einen Verbindungsabschnitt 27 mit einem zweiten Klemmschenkel 28 verbunden ist. Der zweite Klemmschenkel 28, der auf der dem Klemmzungenelement 15 abgewandten Seite 18 des Anlageelements 7 angeordnet ist, bildet zusammen mit dem Verbindungsabschnitt 27 und dem Anlageelement 7 bzw. dem ersten Klemmschenkel 24 ein U-förmiges Klemmprofil. Der erste Klemmschenkel 24 springt an seinem zweiten Ende 26 in Richtung des Klemmzungenelements 15 über die Anlagefläche 8 des Anlageelements 7 vor. Der erste Klemmschenkel 24 wird relativ zu der Anlagefläche 8 des Anlageelements 7 von dem Klemmzungenelement 15 weg verschwenkt wird, wenn das Klemmprofil der Blechmutter 1 bei einer bestimmungsgemäßen Verwendung auf den Randbereich 5 des Bauteils 6 aufgeschoben wird. In den Fig. 12 und 13 ist zur Veranschaulichung die Blechmutter 1 auf zwei unterschiedlich dicke Randbereiche 5 des Bauteils 6 aufgeschoben.

Die Blechmutter 1 weist in einem noch nicht auf den Randbereich 5 des Bauteils 6 aufgeschobenen Zustand quer zu der Anlagefläche 8 eine in Fig. 9 gezeigte Blechmutterhöhenerstreckung h_{B} auf. Der Verbindungsabschnitt 27 des Klemmabschnitts 3 weist quer zu der Anlagefläche 8 eine Verbindungsabschnitthöhenerstreckung h_{V} auf. Bei dem in Fig. 9 gezeigten Zustand der Blechmutter 1 beträgt die Verbindungsabschnitthöhenerstreckung h_{V} deutlich mehr als 50% und näherungsweise mehr als 90% der Blechmutterhöhenerstreckung h_{B}. Dabei springt der Verbindungsabschnitt 27 in einem unmontierten Zustand der Blechmutter 1 mehr als 50% und vorzugsweise mit mehr als 70% der Verbindungsabschnitthöhenerstreckung h_{V} in Richtung des Klemmzungenelements 15 über die Anlagefläche 8 des Anlageelements 7 vor, sodass sich ein Teil des Verbindungsabschnitts 27 mit einer Überlappungshöhenerstreckung h_{Ü} auf die dem Klemmabschnitt 4 gegenüberliegende Seite 23 der Anlagefläche 8 erstreckt und räumlich mit den Aufnahmeabschnitt 2 der Blechmutter 1 überlappt.

Auf diese Weise kann die Blechmutter 1 auf unterschiedlich dicke Randbereiche 5 von Bauteilen 6 aufgeschoben und klemmend an dem betreffenden Randbereich 5 festgelegt werden.

Bei dem in den Figuren dargestellten Ausführungsbeispiel ist die Blechmutter 1 aus einem ebenflächigen Blechzuschnitt eines 0,6 mm dicken Federstahlblechs hergestellt. Der Verbindungsabschnitt weist eine Verbindungsabschnitthöhenerstreckung h_{V} von etwa 5 mm auf, während die Blechmutter eine Blechmutterhöhenerstreckung h_{B} von etwas mehr als 7 mm aufweist. Zwischen der Anlagefläche 8 und dem zweiten Klemmschenkel 28 können Randbereiche 5 von Bauteilen 6 aufgenommen werden, deren Dicke zwischen 0,8 mm und 4 mm variieren kann.

## Patentansprüche

1. Blechmutter (1) mit einem Klemmabschnitt (4) zum klemmenden Festlegen der Blechmutter (1) an einem Randbereich (5) eines Bauteils (6) und mit einem Aufnahmeabschnitt (2) zum Aufnehmen einer in den Aufnahmeabschnitt (2) eindrehbaren Befestigungsschraube (3), wobei der Aufnahmeabschnitt (2) ein Anlageelement (7) mit einer Anlagefläche (8) aufweist, sodass bei einer bestimmungsgemäßen Verwendung das Anlageelement (7) mit der Anlagefläche (8) an einer Außenseite des Bauteils (6) anliegt, wobei das Anlageelement (7) eine von der Anlagefläche (8) in Richtung einer quer zu der Anlagefläche verlaufenden Schraubengewindeachse (9) vorspringende Aufwölbung (10) mit einer in der Aufwölbung (10) ausgebildeten Aussparung (11) aufweist, und wobei die Aussparung (11) von einem Aufwölbungsrand (12) umgeben und begrenzt ist, der längs einer Umfangslinie um die Aussparung (11) eine Gewindegangflanke bildet, **dadurch gekennzeichnet, dass** der Aufnahmeabschnitt (2) ein Klemmzungenelement (15) mit mindestens einer in eine Ausnehmung (16) hineinragenden Klemmzunge (17) aufweist, wobei das Klemmzungenelement (15) in Richtung der Schraubengewindeachse (9) beabstandet von dem Anlageelement (7) angeordnet ist und die Ausnehmung (16) des Klemmzungenelements (15) überlappend mit der Aussparung (11) des Anlageelements (7) angeordnet ist, sodass eine Befestigungsschraube (3), die bei einer bestimmungsgemäßen Verwendung der Blechmutter (1) von einer dem Klemmzungenelement (15) abgewandten Seite (18) durch die Aussparung (11) des Anlageelements (7) eingedreht wird, nachfolgend in der Ausnehmung (16) des Klemmzungenelements (15) in einen formschlüssigen Eingriff mit der mindestens einen Klemmzunge (17) eintritt.

2. Blechmutter (1) nach Anspruch 1, **dadurch gekennzeichnet, dass** die mindestens eine Klemmzunge (17) an einem der Ausnehmung (16) zugewandten Klemmzungenrand (19) eine konkave Einbuchtung (20) aufweist, sodass der Klemmzungenrand (19) der Klemmzunge (17) bei einer bestimmungsgemäßen Verwendung der Blechmutter (1) an einem sich in die Einbuchtung (20) erstreckenden Gewindeschaft (21) einer durch die Ausnehmung (16) ragenden Befestigungsschraube (3) anliegt.

3. Blechmutter (1) nach Anspruch 1 oder Anspruch 2, **dadurch gekennzeichnet, dass** die mindestens eine Klemmzunge (17) an einem der Ausnehmung (16) zugewandten Klemmzungenrand (19) einen in Umfangsrichtung zunehmend größeren Abstand zu der Anlagefläche (8) des Anlageelements (7) aufweist.

4. Blechmutter (1) nach einem der voranstehenden Ansprüche, **dadurch gekennzeichnet, dass** die mindestens eine Klemmzunge (17) elastisch verformbar ausgebildet ist, sodass die Klemmzunge (17) bei einer bestimmungsgemäßen Verwendung der Blechmutter (1) durch den Gewindeschaft (21) der durch die Ausnehmung (16) ragenden Befestigungsschraube (3) entgegen einer Klemmzungenfederkraft von dem Anlageelement (7) weg verformt wird.

5. Blechmutter (1) nach einem der voranstehenden Ansprüche, **dadurch gekennzeichnet, dass** die mindestens eine Klemmzunge (17) in einer radialen Richtung in die Ausnehmung (16) hinein einen in der Richtung der Schraubengewindeachse (9) gekrümmten Verlauf aufweist.

6. Blechmutter (1) nach einem der voranstehenden Ansprüche, **dadurch gekennzeichnet, dass** das Klemmzungenelement (15) zwei Klemmzungen (17) aufweist, die von zwei einander gegenüberliegenden Seiten aus in die Ausnehmung (16) hineinragen.

7. Blechmutter (1) nach einem der voranstehenden Ansprüche, **dadurch gekennzeichnet, dass** der Klemmabschnitt (4) einen ersten Klemmschenkel (24) aufweist, der an einem ersten Ende (25) mit dem Anlageelement (7) verbunden ist und an einem zweiten Ende (26) über einen Verbindungsabschnitt (27) mit einem zweiten Klemmschenkel (28) verbunden ist, der auf einer dem Klemmzungenelement (15) abgewandten Seite (18) des Anlageelements (7) angeordnet ist und zusammen mit dem Verbindungsabschnitt (27) und dem ersten Klemmschenkel (24) bzw. der Anlagefläche (8) des Anlageelements (7) ein U-förmiges Klemmprofil bildet, und dass der erste Klemmschenkel (24) an seinem zweiten Ende (26) in Richtung des Klemmzungenelements (15) über die Anlagefläche (8) des Anlageelements (7) vorspringt und der erste Klemmschenkel (24) relativ zu der Anlagefläche (8) des Anlageelements (7) von dem Klemmzungenelement (15) weg verschwenkt wird, wenn das Klemmprofil der Blechmutter (1) bei einer bestimmungsgemäßen Verwendung auf den Randbereich (5) des Bauteils (6) aufgeschoben wird.

8. Blechmutter (1) nach Anspruch 7, **dadurch gekennzeichnet, dass** die Blechmutter (1) quer zu der Anlagefläche (8) eine Blechmutterhöhenerstreckung h_{B} aufweist und dass der Verbindungsabschnitt (27) des Klemmabschnitts (4) quer zu der Anlagefläche (8) eine Verbindungsabschnitthöhenerstreckung h_{V} aufweist, die mehr als 50% und vorzugsweise mehr als 80% der Blechmutterhöhenerstreckung h_{B} beträgt.

9. Blechmutter (1) nach Anspruch 7 oder Anspruch 8, **dadurch gekennzeichnet, dass** der Verbindungsabschnitt (27) des Klemmabschnitts (4) quer zu der Anlagefläche (8) eine Verbindungsabschnitthöhenerstreckung h_{V} aufweist, und dass der Verbindungsabschnitt (27) in einem unmontierten Zustand der Blechmutter (1) mit mehr als 50% und vorzugsweise mit mehr als 70% der Verbindungsabschnitthöhenerstreckung h_{V} in Richtung des Klemmzungenelements (15) über die Anlagefläche (8) des Anlageelements (7) vorspringt.

10. Blechmutter (1) nach einem der voranstehenden Ansprüche, **dadurch gekennzeichnet, dass** die Blechmutter (1) einstückig hergestellt ist.

11. Blechmutter (1) nach Anspruch 10, **dadurch gekennzeichnet, dass** die Blechmutter (1) aus einem ebenflächigen Blechzuschnitt hergestellt ist.
